# EUROPEAN PATENT SPECIFICATION

(11) **EP 4 235 411 B1**
(45) Date of publication and mention of the grant of the patent: **30.09.2026**
(21) Application number: 21884719.2
(22) Date of filing: 03.09.2021
(51) Int. Cl.: H04M 1/2747, H04M 1/2748, H04M 1/72409, G06F 3/0482, G06F 3/04842, G06F 3/0485, G06F 3/04883, G06F 9/451, H04M 1/27467

(54) **INDEX DISPLAY METHOD AND WEARABLE DEVICE**
INDEXANZEIGEVERFAHREN UND WEARABLE-VORRICHTUNG
PROCÉDÉ D'AFFICHAGE D'INDEX DISPOSITIF À PORTER SUR SOI

(30) Priority: 27.10.2020 CN 202011166501
(43) Date of publication of application: 30.08.2023
(73) Proprietor: Huawei Technologies Co., Ltd., Shenzhen, Guangdong 518129 (CN)
(72) Inventor: HAN, Yi, Shenzhen, Guangdong 518129 (CN); LUO, Long, Shenzhen, Guangdong 518129 (CN); ZHANG, Ziyue, Shenzhen, Guangdong 518129 (CN); GU, Guosheng, Shenzhen, Guangdong 518129 (CN)
(74) Representative: Gill Jennings & Every LLP
(86) International application number: PCT/CN2021/116502
(87) International publication number: WO 2022/088988

(56) References cited:
- WO-A1-2017/121277
- CN-A- 106 210 251
- CN-A- 106 970 916
- CN-A- 107 077 296
- CN-A- 107 678 665
- CN-A- 112 948 422
- CN-S- 303 838 613
- US-A1- 2017 017 389
- US-B2- 8 860 674
- STEPHEN ONEY ET AL: "ZoomBoard", HUMAN FACTORS IN COMPUTING SYSTEMS, ACM, 2 PENN PLAZA, SUITE 701 NEW YORK NY 10121-0701 USA, 27 April 2013 (2013-04-27), pages 2799 - 2802, XP058016950, ISBN: 978-1-4503-1899-0, DOI: 10.1145/2470654.2481387

## Description

### TECHNICAL FIELD

This application relates to the field of terminal technologies, and in particular, to an index display method and a wearable device.

### BACKGROUND

With development of terminal technologies, a wearable device such as a smartwatch can implement more functions. Currently, the smartwatch is provided with a call function. A phone book is stored in the smartwatch, and a call is made in a manner of detecting that a user taps a specific contact in the phone book. Because a display of a general smartwatch has a limited area, display content is limited, and a user needs to slide a plurality of times to find a target contact.

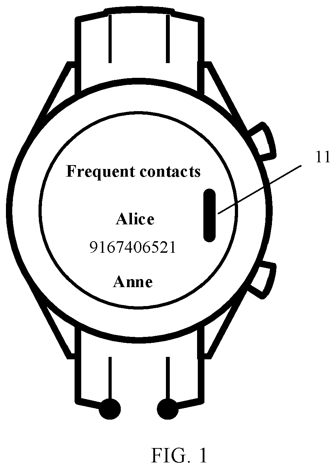

As shown in FIG. 1, some smartwatches each display a slider 11 on a display, and a sliding operation performed by the user on the slider 11 is detected, to search for a target contact by quickly sliding. However, when there are a large quantity of contacts in the phone book, the current method still has low search efficiency. In addition, because the display is small, precision of searching for a target contact by sliding is limited, and the user needs to repeatedly search for the target contact. This affects user experience.

WO 2017/121277 A1 discloses method and device for retrieval based on a wearable device.

CN 107 077 296 A discloses a user terminal device and a control method thereof. The user terminal device includes a touch screen configured to display a keyboard user interface (UI), a detector disposed on a frame area of the user terminal device and configured to detect user interaction, and a controller configured to respond to the detected. The user interaction of the frame area of the user terminal device, and the attribute of the keyboard UI is changed according to the user interaction detected at the frame area.

US 8 860 674 B2 discloses mobile terminal having a circle type display and a method for controlling the same is disclosed herein. A scroll bar is provided at an edge of the circle type display in response to a user input. The user may control the mobile terminal and the circle type display through touch inputs on the scroll bar.

STEPHEN ONEY ET AL: "ZoomBoard", HUMAN FACTORS IN COMPUTING SYSTEMS, ACM, 2 PENN PLAZA, SUITE 701 NEW YORK NY 10121-0701 USA, 27 April 2013 (2013-04-27), pages 2799-2802 discloses a text entry technique for inch-scale and smaller devices, such as a wristwatch computers or digital jewelry.

### SUMMARY

The invention is set out in the appended claims. According to an index display method and a wearable device provided in this application, an index identifier can be used to quickly search for target content, to improve indexing efficiency. In addition, a size of a region used to display the index identifier is variable, to ensure a visible area.

To achieve the foregoing objectives, this application adopts the following technical solutions.

According to a first aspect, this application provides an index display method in accordance with appended claim 1.

For example, the first condition includes: within a preset time period, detecting an operation of tapping a zoom control, or a sliding operation at the start location or the end location of the first region, or an operation in the second region, or no operation.

In this way, when a large quantity of content needs to be displayed, the index identifier displayed in the first region can be used to quickly search for target content. In addition, in response to an operation of a user, the quantity of index identifiers displayed in the first region can change, and the size of the first region matches the quantity of displayed index identifiers. In this way, when indexing efficiency is ensured, a larger visible area can be provided for the user in response to the operation of the user.

Further, when the quantity of index identifiers displayed in the first region is changed from the second quantity to the first quantity, the selected second index identifier can be displayed at the start location or the end location of the first region when the second quantity of index identifiers is displayed, so that the user quickly locks the currently selected second index identifier.

In a possible implementation, an outer edge shape of the first region matches an edge shape of the index interface.

That is, the shape of the first region can adaptively match the edge shape of the index interface, and is displayed at an edge of the index interface, to reserve more visible areas for the user to display electronic document content.

In a possible implementation, an index rule corresponding to the index identifier includes a first index rule and a second index rule. The method further includes: An index identifier that complies with the first index rule and a first switching control are displayed in the first region. The first switching control is used to switch to display an index identifier that complies with the second index rule. In response to an operation of tapping the first switching control, the index identifier that complies with the second index rule and a second switching control are displayed in the first region. The second switching control is used to switch to display the index identifier that complies with the first index rule.

For example, contacts in multi-language are stored in a phone book of a wearable device, and therefore, it may be impossible to search for all contacts by using one index rule. For example, if a contact with a Japanese name is stored in the phone book, the contact is not applicable to a manner of indexing by using an English letter, and an index rule applicable to Japanese needs to be preset in the smartwatch. In this case, a switching control is preset to implement switching of a multi-language index rule.

In a possible implementation, a maximum quantity of index identifiers displayed in the first region is less than or equal to a first threshold, and the method further includes: If a quantity of index identifiers that need to be displayed is greater than the first threshold, a hidden control is displayed, and a third quantity of index identifiers are hidden. A quantity of index identifiers that need to be displayed after being hidden is less than or equal to the first threshold. In response to an operation of tapping the hidden control, the third quantity of hidden index identifiers are displayed in the first region.

For example, if a quantity of characters that need to be displayed in an index bar exceeds a preset quantity, some characters that exceed the preset quantity are hidden in the index bar, to avoid a problem that a display font is excessively small and a user operation is inconvenient because of an excessively large quantity of displayed characters. In addition, impact on a display effect is avoided. Based on this, a hidden control is preset in the index bar of the smartwatch, and a hidden character is displayed in the index bar by detecting an operation performed by the user on the hidden control. A character may be preset to represent the hidden control, for example, "*" and ".".

In a possible implementation, when the first condition is met, that the quantity of index identifiers displayed in the first region is changed from the second quantity to the first quantity includes: When the first condition is met, the first region including the first quantity of index identifiers and including the second index identifier is displayed at a first location on the index interface. The first location matches a location of the second index identifier in the first region including the second quantity of index identifiers, the first location is different from a second location at which the first region including the first quantity and including the first index identifier is displayed, and the second location matches a location of the first index identifier in the first region including the second quantity of index identifiers. Alternatively, when the first condition is met, the first region including the first quantity of index identifiers and including the second index identifier is displayed at a third location on the index interface. The third location is the same as a fourth location at which the first region including the first quantity and including the first index identifier is displayed.

In some scenarios, the wearable device detects a sliding operation performed by the user on a display, a contact list in the second region changes through scrolling, and the index identifier displayed in the first region changes through scrolling accordingly. That is, the first region including the first quantity of index identifiers is displayed at a fixed location.

In some other scenarios, the wearable device detects a sliding operation performed by the user on the display, a contact list in the second region changes through scrolling, and a location of the first region and the index identifier displayed in the location of the first region change through scrolling accordingly. That is, the location that is of the first region and that displays the first quantity of index identifiers changes, and the location of the first region matches a location of a selected index identifier in the first region that displays the second quantity of index identifiers.

In the foregoing two scenarios, a location change status of the first region may be customized and configured based on a use habit of the user, or may be pre-configured before the wearable device is delivered.

In a possible implementation, the first operation is an operation of tapping a zoom control, or a sliding operation at the start location or the end location of the first region. The second operation is a tapping operation or a sliding operation.

Specifically, the first operation is used to switch an expanded state of the first region, for example, switch between a fully expanded state and a non-fully expanded state. The second operation is used to select an index identifier and locate corresponding display content.

According to a second aspect, this application provides a device in accordance with appended claim 7. Implementations of the second aspect are provided in appended claims 8 to 13.

In addition, for technical effects of the device in the second aspect, refer to the technical effect of the index display method in the first aspect. Details are not described herein again.

According to a third aspect, this application provides a computer-readable storage medium in accordance with appended claim 14.

According to a fourth aspect, this application provides a computer program product in accordance with appended claim 15.

### BRIEF DESCRIPTION OF DRAWINGS

FIG. 1 is a schematic diagram of a smartwatch interface in the conventional technology according to an embodiment of this application;
FIG. 2A is a schematic diagram of a communications system according to an embodiment of this application;
FIG. 2B is a schematic diagram of a structure of a wearable device according to an embodiment of this application;
FIG. 3 is a schematic diagram 1 of a group of interfaces of a smartwatch according to an embodiment of this application;
FIG. 4 is a schematic diagram 2 of a group of interfaces of a smartwatch according to an embodiment of this application;
FIG. 5 is a schematic diagram 3 of a group of interfaces of a smartwatch according to an embodiment of this application;
FIG. 6 is a schematic diagram 4 of a group of interfaces of a smartwatch according to an embodiment of this application;
FIG. 7 is a schematic diagram 5 of a group of interfaces of a smartwatch according to an embodiment of this application;
FIG. 8 is a schematic diagram 6 of a group of interfaces of a smartwatch according to an embodiment of this application;
FIG. 9 is a schematic diagram 7 of a group of interfaces of a smartwatch according to an embodiment of this application;
FIG. 10 is a schematic diagram 8 of a group of interfaces of a smartwatch according to an embodiment of this application;
FIG. 11 is a schematic diagram 9 of a group of interfaces of a smartwatch according to an embodiment of this application;
FIG. 12 is a schematic diagram 10 of a group of interfaces of a smartwatch according to an embodiment of this application;
FIG. 13 is a schematic diagram 11 of a group of interfaces of a smartwatch according to an embodiment of this application;
FIG. 14 is a schematic diagram 12 of a group of interfaces of a smartwatch according to an embodiment of this application;
FIG. 15 is a schematic flowchart of an index display method according to an embodiment of this application; and
FIG. 16 is a schematic diagram of a structure of an index display apparatus according to an embodiment of this application.

### DESCRIPTION OF EMBODIMENTS

With reference to the accompanying drawings, the following describes in detail an index display method and a wearable device that are provided in embodiments of this application.

Terms "including", "having", and any other variant thereof mentioned in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that, in embodiments of this application, a word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner.

In the descriptions of this application, unless otherwise specified, "a plurality of" means two or more than two. A term "and/or" in this specification describes only an association relationship between associated objects and indicates that there may be three relationships. For example, A and/or B may represent the following three cases: Only A exists, both A and B exist, and only B exists.

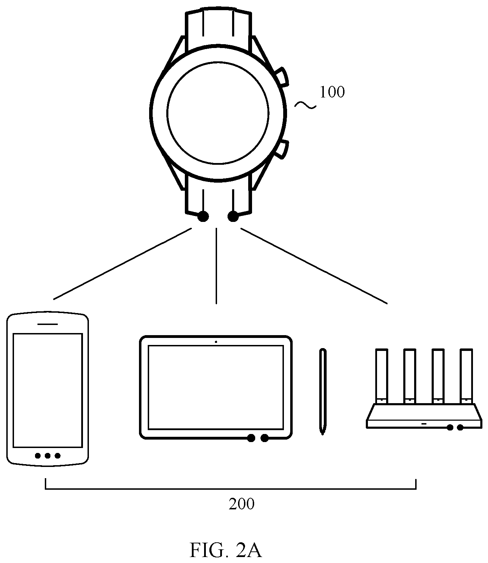

FIG. 2A is a schematic diagram of a communications system to which an index display method is applied according to an embodiment of this application. As shown in FIG. 2A, the communications system includes a wearable device 100. Optionally, the communications system may further include one or more terminal devices 200 that communicate with the wearable device 100.

Optionally, the wearable device 100 may be a device having a display function, such as a smartwatch, a smart band, a smart helmet, or smart glasses. The terminal device 200 may be a device such as a mobile phone, a tablet computer, a notebook computer, an ultra-mobile personal computer (ultra-mobile personal computer, UMPC), a personal digital assistant (personal digital assistant, PDA), an artificial intelligence (artificial intelligence, AI) device, or a router. This is not limited in this embodiment of this application.

In the communications system, the wearable device 100 may separately establish a short-range wireless communication connection to the one or more terminal devices 200, to implement a communication function between the wearable device 100 and the terminal device 200. For example, the wearable device 100 may establish a communication connection such as a Bluetooth connection, a wireless fidelity (wireless fidelity, Wi-Fi) connection, a ZigBee (ZigBee) connection, or a near field communication (near field communication, NFC) connection to the terminal device 200. Certainly, the wearable device 100 may further establish a communication connection by using a cellular network interconnection or a transfer device (for example, a USB data cable or a Dock device). This is not limited in this embodiment of this application.

In some embodiments, when the communications system includes only the wearable device 100, the wearable device 100 stores a phone book, and a call can be implemented after an operation of tapping a contact displayed on a display by a user is detected.

In some other embodiments, when the wearable device 100 is connected to the terminal device 200, a phone book between the wearable device 100 and the terminal device 200 can be synchronized, and the terminal device 200 may implement a call by using the wearable device 100. Alternatively, if the wearable device 100 controls the terminal device 200 to perform a corresponding operation, for example, photographing, a control command needs to be preset in the wearable device 100.

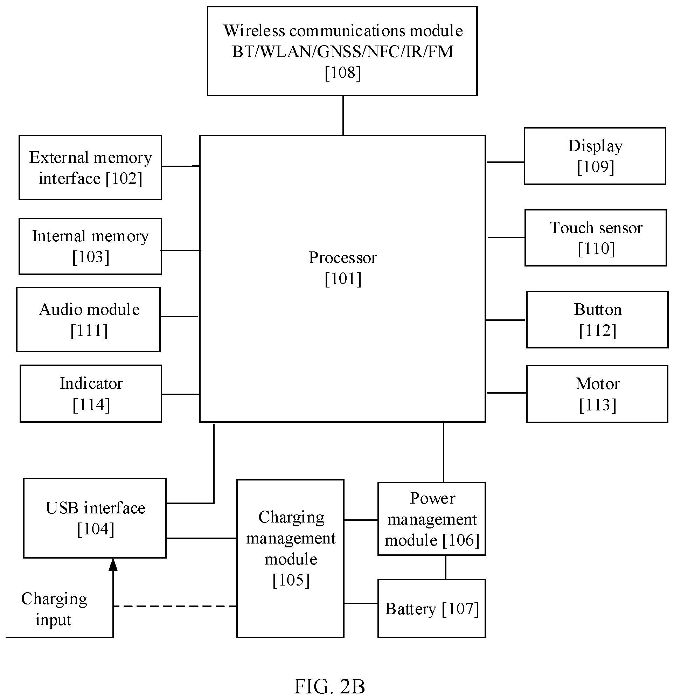

FIG. 2B is a schematic diagram of a structure of the wearable device 100 according to this embodiment of this application. The wearable device 100 includes a processor 101, an external memory interface 102, an internal memory 103, a universal serial bus (universal serial bus, USB) interface 104, a charging management module 105, a power management module 106, a battery 107, a wireless communications module 108, a display 109, a touch sensor 110, an audio module 111, a button 112, a motor 113, an indicator 114, and the like.

It may be understood that the structure shown in this embodiment of this application does not constitute a specific limitation on the wearable device 100. In some other embodiments of this application, the wearable device 100 may include more or fewer components than those shown in the figure, or combine some components, or split some components, or have different component arrangements. The device 100 includes at least a processor 101, a memory 103, and a display 109. The components shown in the figure may be implemented by hardware, software, or a combination of software and hardware.

The processor 101 includes one or more processing units. For example, the processor 101 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural network processing unit (neural network processing unit, NPU). Different processing units may be independent components, or may be integrated into one or more processors.

The controller may generate an operation control signal based on instruction operation code and a time sequence signal, to complete control of instruction fetching and instruction execution.

A memory is further disposed in the processor 101, and is configured to store instructions and data. In some embodiments, the memory in the processor 101 is a cache. The memory may store instructions or data just used or cyclically used by the processor 101. If the processor 101 needs to use the instructions or the data again, the processor may directly invoke the instructions or the data from the memory. This avoids repeated access, and reduces waiting time of the processor 501, thereby improving system efficiency.

In some embodiments, the processor 101 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 101 may include a plurality of groups of I2C buses. The processor 101 may be separately coupled to the touch sensor 110, a charger, and the like through different I2C bus interfaces. For example, the processor 101 may be coupled to the touch sensor 110 through the I2C interface, so that the processor 101 communicates with the touch sensor 110 through the I2C bus interface, to implement a touch function of the wearable device 100.

It may be understood that an interface connection relationship between the modules shown in this embodiment of this application is merely an example for description, and does not constitute a limitation on the structure of the wearable device 100. In some other embodiments of this application, the wearable device 100 may alternatively use an interface connection manner different from that in the foregoing embodiment, or a combination of a plurality of interface connection manners.

The display 109 is configured to display a corresponding image and the like. The display 109 may include a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like.

The touch sensor 110 is also referred to as a "touch component". The touch sensor 110 may be disposed on the display 109, and the touch sensor 110 and the display 109 constitute a touchscreen, which is also referred to as a "touch screen". The touch sensor 110 is configured to detect a touch operation performed on or near the touch sensor 110. The touch sensor 110 may transfer the detected touch operation to the application processor, to determine a type of a touch event. A visual output related to the touch operation may be provided by using the display 109. In some other embodiments, the touch sensor 110 may be alternatively disposed on a surface of the wearable device 100, and is located at a location different from that of the display 109.

An index bar is displayed on the display 109, and the wearable device 100 detects, by using the touch sensor 110, an operation performed by the user on the index bar, quickly determines corresponding display content, and displays the content on the display 109.

The charging management module 105 is configured to receive a charging input from the charger. The charger may be a wireless charger or a wired charger. In some embodiments of wired charging, the charging management module 105 may receive a charging input from the wired charger through the USB interface 104. In some embodiments of wireless charging, the charging management module 105 may receive a wireless charging input through a wireless charging coil of the wearable device 100. When charging the battery, the charging management module 105 may further supply power to the wearable device 100 by using the power management module.

The power management module 106 is configured to connect the battery 107 and the charging management module 105 to the processor 101. The power management module 106 receives an input of the battery 107 and/or the charging management module 105, and supplies power to the processor 101, the internal memory, the wireless communications module 108, the display 109, and the like. The power management module 106 may be further configured to monitor parameters such as a capacity of the battery 107, a cycle count of the battery 107, and a health status (electric leakage and impedance) of the battery 107. In some other embodiments, the power management module 106 may alternatively be disposed in the processor 101. In some other embodiments, the power management module 106 and the charging management module 105 may alternatively be disposed in a same device.

The wireless communications module 108 may provide a wireless communication solution that is applied to the wearable device 100 and that includes a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communications module 108 may be one or more devices that integrate at least one communications processor module. The wireless communications module 108 receives an electromagnetic wave through an antenna, performs frequency modulation and filtering processing on an electromagnetic wave signal, and sends a processed signal to the processor 101. The wireless communications module 108 may further receive a to-be-sent signal from the processor 101, perform frequency modulation and amplification on the signal, and convert a processed signal into an electromagnetic wave for radiation through the antenna.

The external memory interface 102 may be configured to connect an external memory card, for example, a micro SD card, to extend a storage capability of the wearable device 100. The external storage card communicates with the processor 101 through the external memory interface 102, to implement a data storage function. For example, you can save files such as the phone book and a picture in the external storage card.

The internal memory 103 is configured to store computer-executable program code. The executable program code includes instructions. The internal memory 103 may include a program storage area and a data storage area. The program storage area may store an operating system, an application required by at least one function (such as a call function or a time setting function), and the like. The data storage area may store data (such as the phone book and world time) created in a process of using the wearable device 100, and the like. In addition, the internal memory 103 may include a high-speed random access memory, and may further include a non-volatile memory, for example, at least one magnetic disk storage device, a flash memory, or a universal flash storage (universal flash storage, UFS). The processor 101 runs instructions stored in the internal memory 103 and/or instructions stored in the memory disposed in the processor 101, to execute various function applications and data processing of the wearable device 100.

The wearable device 100 may implement an audio function, such as music playing and making a call, by using the audio module 111, the application processor, and the like.

The audio module 111 is configured to convert digital audio information into an analog audio signal for output, and is also configured to convert an analog audio input into a digital audio signal. The audio module 111 may be further configured to code and decode an audio signal. In some embodiments, the audio module 111 may be disposed in the processor 101, or some function modules of the audio module 111 are disposed in the processor 101.

The button 112 includes a watch crown button, a volume button, and the like. The button 112 may be a mechanical button, or may be a touch button. The wearable device 100 may receive an input of the button 112, and generate a button signal input related to a user setting and function control of the wearable device 100.

The motor 113 may generate a vibration prompt. The motor 113 may be used for an incoming call vibration prompt, or may be used for touch vibration feedback. For example, touch operations performed on different applications (for example, index search and call making) may correspond to different vibration feedback effects. A touch vibration feedback effect may be further customized.

The indicator 114 may be an indicator light, and may be configured to indicate a charging status and a power change, or may be configured to indicate a message, a missed call, a notification, and the like.

The following describes an index display method provided in an embodiment of this application by using an example in which a wearable device 100 is a smartwatch having the structure shown in FIG. 2B.

Optionally, display content of some functions in the smartwatch is relatively large, and an index function can be used to help a user quickly locate target display content. For example, in a phone book function, contact information is stored in a phone book. If there are a relatively large quantity of contacts, contact information displayed by the smartwatch each time is limited, and search efficiency can be effectively improved by using the index function.

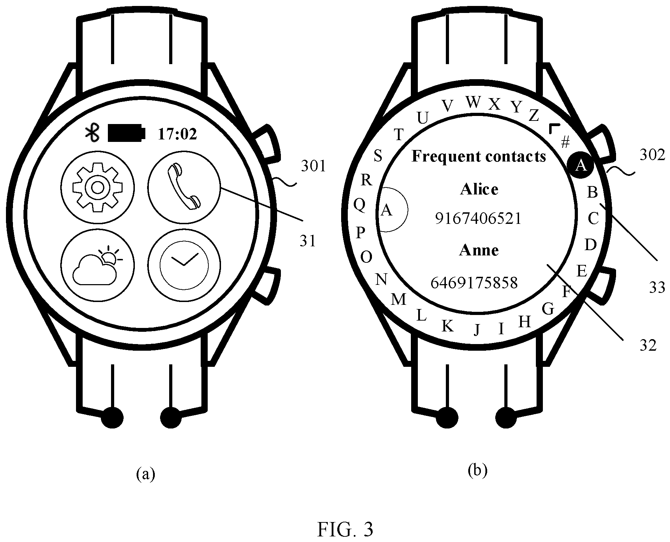

In some scenarios, the user may indicate, in a manner such as a touch operation, a button operation, or a voice operation, the smartwatch to start a call application and display the phone book. For example, on a main interface 301 shown in (a) in FIG. 3, the smartwatch starts a call application in response to an operation of tapping a call icon 31 by the user, and displays a phone book interface 302 shown in (b) in FIG. 3. Alternatively, the mobile phone starts the call application in response to a voice indication operation of opening the call application by the user, and displays the phone book interface 302 shown in (b) in FIG. 3.

As shown in (b) in FIG. 3, the phone book interface 302 displays a display region 32 and an index bar 33. The index bar 33 is used to display an index identifier, and the display region 32 is used to display corresponding display content. For example, English letters are sequentially displayed in the index bar 33, and the English letters are used as index identifiers. A contact list is displayed in the display region 32. Contacts displayed in the contact list correspond to English letters in the index bar. For example, as shown in (b) in FIG. 3, an operation of selecting a letter A is detected in the current index bar 33, and the smartwatch quickly locates a contact location corresponding to the letter A in the contact list, and displays the contact location in the display region 32, such as Alice and Anne.

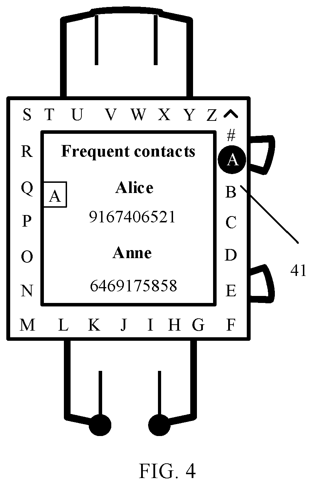

The index bar is located at an edge of a display, and a shape and a width of the index bar are adaptively displayed according to an edge shape of the display. For example, as shown in (b) in FIG. 3, if the edge shape of the display of the smartwatch is a circle, a shape of the index bar 33 is a circle, and the index bar 33 is displayed at the edge of the display. For another example, as shown in FIG. 4, if the edge shape of the display of the smartwatch is a rectangle, a shape of an index bar 41 is a rectangle, and the index bar 41 is displayed at the edge of the display.

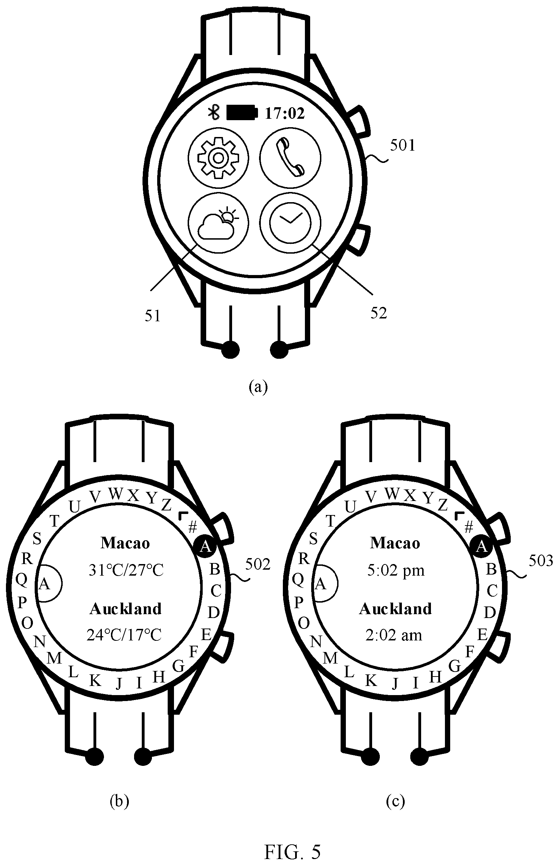

In some other scenarios, in addition to the phone book function in the smartwatch, display content of some functions is relatively large. By using the index display method provided in this embodiment of this application, target display content can be quickly and accurately located. For example, a weather function is provided. For example, on a main interface 501 shown in (a) in FIG. 5, the smartwatch starts a weather application in response to an operation of tapping a weather icon 51 by the user, and displays a weather interface 502 shown in (b) in FIG. 5. On the weather interface 502, letters displayed in the index bar correspond to content displayed in the display region, to implement quick locating. For another example, a clock function is provided. For example, on the main interface 501 shown in (a) in FIG. 5, the smartwatch starts a clock application in response to an operation of tapping a clock icon 52 by the user, and displays a clock interface 503 shown in (c) in FIG. 5. On the clock interface 503, letters displayed in the index bar correspond to content displayed in the display region, to implement quick locating. For still another example, a chapter index in a document reading scenario and the like are provided.

The following uses an example in which the display of the smartwatch is in a circle, the phone book function is enabled, and a contact is searched for by using the index bar for description.

In some embodiments, the smartwatch displays the phone book interface, detects operations such as sliding on the display, operating a watch crown, and tapping an index identifier in the index bar by the user, displays the contact list in a scrolling manner, and highlights an index identifier that is in the index bar and that corresponds to displayed content. The sliding operation performed by the user on the display includes a sliding operation performed by the user in the index bar or a sliding operation performed by the user in the display region.

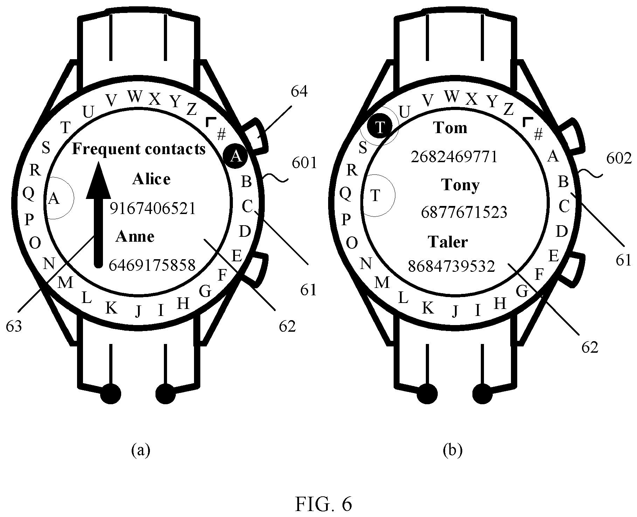

For example, on an interface 601 shown in (a) in FIG. 6, that a current index is located to a letter A is displayed in an index bar 61, and a contact corresponding to the letter A is displayed in a display region 62. The smartwatch detects a sliding operation performed by the user on the display, for example, sliding upward in a direction shown by an arrow 63. Alternatively, the smartwatch detects an operation of operating a watch crown 64 by the user. Alternatively, the smartwatch detects an operation of tapping a letter T in an index bar 61 by the user. An interface 602 shown in (b) in FIG. 6 is displayed, the index bar 61 is relocated to the letter T, and display content in the display region 62 changes to a contact corresponding to the letter T. In other words, the user may quickly switch, by using the index bar, display content in the display region to a partial contact list range that includes a target contact. In this way, the user can directly determine the target contact from contacts displayed in the current display region, or find the target contact through a few operations, thereby improving user experience.

Further, as shown in (a) in FIG. 6, the letter A in the current index bar 61 is highlighted by color, to prompt the user that a contact corresponding to the letter A is currently indexed. It may be understood that a selected index identifier may alternatively be highlighted in another manner. For example, as shown in (b) in FIG. 6, the letter T in the index bar 61 is highlighted by color and aperture. This is not specifically limited in this embodiment of this application.

In some embodiments, information such as a length, a width, a radian, and space of the index bar is preset based on an area size of the display. For example, a length of the index bar is preset, so that the index bar is displayed in a non-fully expanded state, to reserve more regions for displaying the contact list.

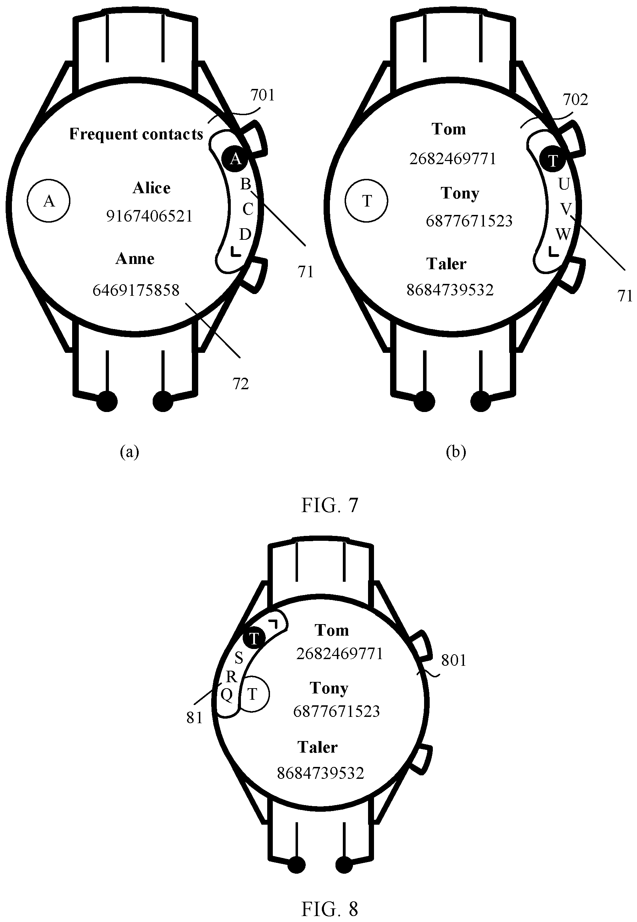

For example, a length of the index bar is preset on the smartwatch, and an example in which four letters are displayed in the index bar is used for description. As shown on an interface 701 in (a) in FIG. 7, a current index bar 71 is in a non-fully expanded state, and four letter index identifiers in total of letters A to D are displayed. By comparing with the display region 62 corresponding to the index bar 61 that is on the interface 601 and that is in a fully expanded state shown in (a) in FIG. 6, a proportion of a display region 72 on the interface 701 increases, and more display content can be displayed. In addition, when detecting a forward or reverse sliding operation on the display that displays the index bar in the non-fully expanded state, the smartwatch may still display, in the index bar in a scrolling manner, an index identifier corresponding to content in the display region.

In some scenarios, the smartwatch detects a sliding operation performed by the user on the display, and the contact list in the display region changes through scrolling, and the index identifier displayed in the corresponding index bar changes through scrolling accordingly.

For example, the smartwatch detects a sliding operation of the user on the interface 701 shown in (a) in FIG. 7, and displays an interface 702 shown in (b) in FIG. 7. On the interface 702, content displayed in the index bar 71 is changed to four index identifiers, namely, letters T to W.

In some other scenarios, the smartwatch detects a sliding operation performed by the user on the display, and the contact list in the display region changes through scrolling, and a location of a corresponding index bar and an index identifier displayed in the contact list change through scrolling accordingly.

For example, the smartwatch detects a sliding operation of the user on the interface 701 shown in (a) in FIG. 7, and displays an interface 801 shown in FIG. 8. On the interface 801, content displayed in an index bar 81 is changed to four index identifiers, namely, letters Q to T. In addition, a location of the letters Q to T displayed in the index bar 81 is the same as a location of the letters Q to T in the index bar 61 shown in (a) in FIG. 6. In other words, a location of the index bar 81 changes as the location of the displayed index identifier changes.

In the foregoing two scenarios, a location change status of the index bar may be customized and configured based on a use habit of the user, or may be pre-configured before the wearable device is delivered. By adding an index bar display manner in a non-fully expanded state, while both indexing efficiency and precision are considered, display space of the display of the smartwatch is saved, and a visible area of the display region is increased. Further, display aesthetics of the smartwatch is further improved.

In some embodiments, a zoom control is preset in the index bar, or a sliding gesture of the user at the head and tail ends of the index bar is detected, to switch an expanded state of the index bar. For example, switching is performed between a non-fully expanded state and a fully expanded state. In this way, indexing efficiency is further improved while the visible area is ensured.

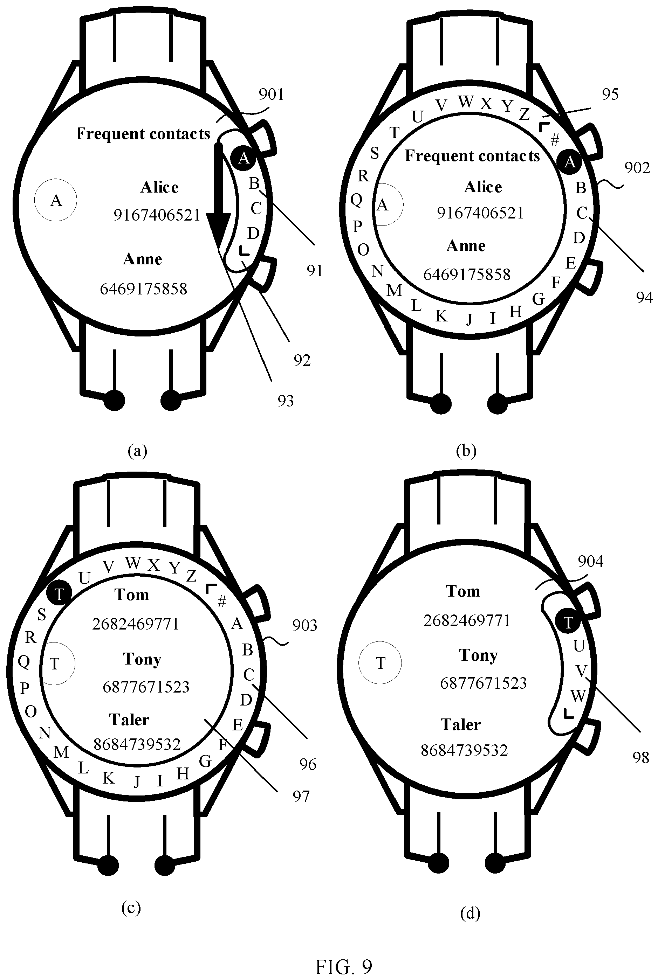

For example, an interface 901 is shown in (a) in FIG. 9. An index bar 91 on the interface 901 is in a non-fully expanded state. In a current index state, the user may need to perform a sliding operation several times to find the target contact. Therefore, in response to an operation of tapping a zoom control 92 by the user, the smartwatch displays an interface 902 shown in (b) in FIG. 9, and an index bar 94 on the interface 902 is switched to a fully expanded state. Alternatively, on the interface 901, the smartwatch detects a clockwise sliding operation at the head end or the tail end of the index bar. For example, if the smartwatch detects, at the tail end of the current index bar, that the user slides downward in a direction of an arrow 93, the smartwatch expands the index bar, and displays an index bar 94 on the interface 902. The head and tail ends of the index bar may also be described as a start location and an end location of the index bar, and may be distinguished based on an index identifier sequence or a direction of content displayed in the display region of the smartwatch. As shown in (a) in FIG. 9, the index bar 91 has a head end being one end of the letter A, and a tail end being one end of the letter D. Optionally, the clockwise sliding operation at the head end or the tail end of the index bar may be preset as an operation of expanding the index bar, and a counterclockwise sliding operation may be an operation of folding the index bar.

In this way, by detecting the operation of tapping the zoom control or the sliding gesture, the smartwatch can switch the index bar in the non-fully expanded state to the index bar in the fully expanded state. That is, the user can directly select, by performing one operation, a required index identifier from the index bar that is fully expanded, thereby improving indexing efficiency. For example, on the interface 901 shown in (a) in FIG. 9, an index identifier corresponding to the target contact is the letter N. In this case, it is difficult to implement one-time sliding, that is, accurately sliding to a contact list range corresponding to the letter N, regardless of whether the sliding is forward sliding or reverse sliding. Therefore, the user can expand the index bar by using the zoom control, and quickly locate the letter N.

For another example, after a preset time period, the index bar 94 in the fully expanded state of the interface 902 shown in (b) in FIG. 9 is switched to the index bar 91 in the non-fully expanded state shown in (a) in FIG. 9. Alternatively, after detecting an operation of tapping a zoom control 95 by the user on the interface 902, the smartwatch switches the index bar 94 to the non-fully expanded state, and displays the interface 901 shown in (a) in FIG. 9. Alternatively, the smartwatch detects, on the interface 902 shown in (b) in FIG. 9, an operation of tapping a specific letter by the user. For example, after detecting an operation of tapping the letter T by the user, the smartwatch displays an interface 903 shown in (c) in FIG. 9. The letter T in an index bar 96 is visually highlighted, and a corresponding contact list is displayed in a display region 97. Then, the smartwatch displays, in response to a sliding or tapping operation performed by the user in the display region 97, an interface 904 shown in (d) in FIG. 9. On the interface 904, the index bar 98 is switched to a non-fully expanded state. In other words, after detecting an operation that the user taps a specific index identifier in the index bar in a fully expanded state, the smartwatch switches the index bar to a non-fully expanded state, and increases a visible area of the display region, so that the user can quickly determine target display content from display content corresponding to the current index identifier.

In some embodiments, after the index bar is switched from the fully expanded state to the non-fully expanded state, an index identifier displayed at the head end or the tail end of the index bar is an index identifier that is selected by the user and that is detected by the smartwatch in the fully expanded state of the index bar. Alternatively, after the index bar is switched from the fully expanded state to the non-fully expanded state, an index identifier displayed at the head end or the tail end of the index bar is an index identifier corresponding to content displayed in a current display region.

For example, the interface 903 shown in (c) in FIG. 9 is an interface displayed after the smartwatch detects an operation of tapping the letter T by the user in the index bar. On the interface 903, a selected index identifier (that is, the letter T) is highlighted, and content corresponding to the letter T is correspondingly displayed in the display region 97. Then, the smartwatch displays, in response to a sliding or tapping operation performed by the user in the display region 97, the interface 904 shown in (d) in FIG. 9. On the interface 904, the index bar 98 is switched to a non-fully expanded state. In the index bar 98, the head end displays the letter T selected by the user, and correspondingly, displayed content is a contact list corresponding to the letter T. Alternatively, the index bar 81 shown in FIG. 8 highlights the letter T at the tail end of the index bar 81. That is, the selected index identifier may be highlighted at an upper location on the index bar based on the use habit of the user, to facilitate user identification.

In this way, when the user selects a specific index identifier when the index bar is fully expanded, the user may need to continue to search for a target contact in a contact list corresponding to the current index identifier. Further, in response to the operation of the user, the index bar displayed by the smartwatch is switched from the fully expanded state to the non-fully expanded state, and more display regions are provided for the user to display the contact list corresponding to the currently selected index identifier. In addition, the currently selected index identifier is displayed at the head end or the tail end of the index bar, so that the user can view the index identifier more quickly. This facilitates a subsequent operation of the user and provides higher use experience for the user.

In some embodiments, a quantity of characters displayed in the index bar in the non-fully expanded state is preset, to restrict a length of the index bar and a visual effect. For example, a minimum quantity of characters displayed in the index bar is 2. In addition, if the quantity of characters displayed in the index bar in the non-fully expanded state exceeds 5, a zoom control is set and is used to fold the index bar, to return to a preset display state. A limit of the quantity of characters displayed in the index bar does not include a zoom control, that is, the quantity of characters is only used to indicate a quantity of index identifiers.

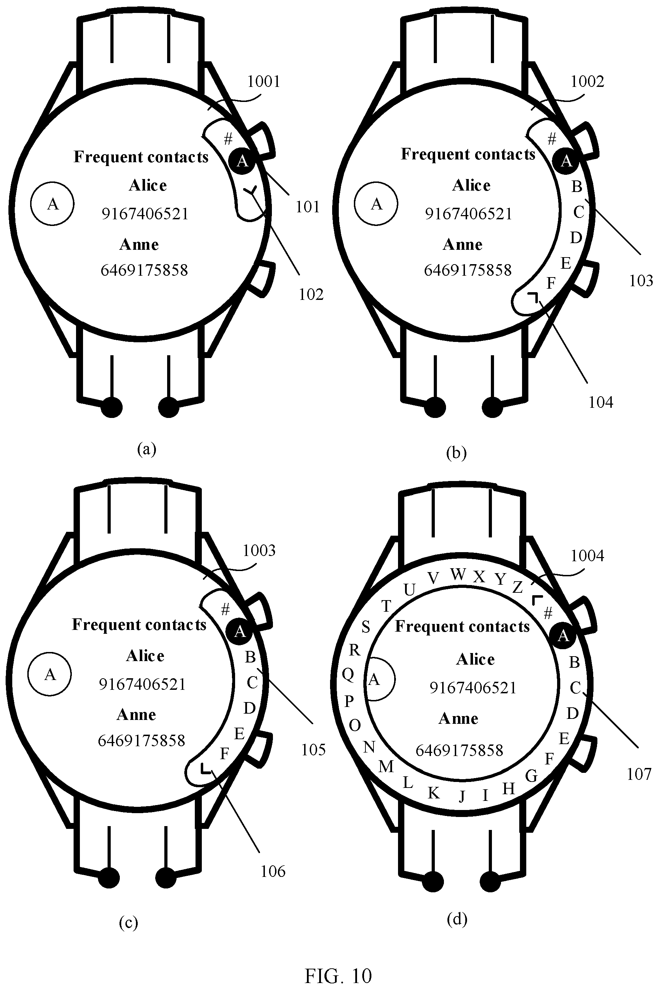

For example, an interface 1001 is shown in (a) in FIG. 10. A minimum quantity of characters is displayed in an index bar 101 on the interface 1001, for example, an index identifier "#" and an index identifier "A" are displayed. In response to an operation of tapping a zoom control 102 by the user or detecting a sliding operation performed by the user at the tail end of the index bar 101, the smartwatch expands the index bar 101, and displays an interface 1002 shown in (b) in FIG. 10.

In other words, the non-fully expanded state of the index bar of the smartwatch includes an initial state and a semi-expanded state. In the initial state, in response to the operation of tapping the zoom control by the user, the smartwatch expands the index bar to the semi-expanded state. Further, in the semi-expanded state, in response to the operation of tapping the zoom control by the user, the smartwatch folds the index bar to the preset display state. The preset display state may be the initial state, or the preset display state may be an optimal display state, for example, a state in which four characters are displayed. For example, on the interface 1002 shown in (b) in FIG. 10, an index bar 103 is in a semi-expanded state. After an operation of tapping a zoom identifier 104 by the user is detected, the smartwatch displays the interface 1001 shown in (a) in FIG. 10, and the index bar 101 is displayed in an initial state.

In this way, an index bar in a semi-expanded state with more characters is preset to be displayed, that is, indexing efficiency is ensured, and by comparing with the fully expanded state, a larger visible area can be provided for the user.

For another example, a zoom identifier is preset in the index bar in the semi-expanded state, and is used to switch the index bar from the semi-expanded state to the fully expanded state. As shown on the interface 1001 shown in (a) in FIG. 10, in response to an operation of tapping the zoom identifier 102 by the user, the smartwatch displays an interface 1003 shown in (c) in FIG. 10, and an index bar 105 on the interface 1003 is in a semi-expanded state. In response to an operation of tapping a zoom identifier 106 by the user, the smartwatch displays an interface 1004 shown in (d) in FIG. 10, and an index bar 107 on the interface 1004 is in a fully expanded state.

For another example, when displaying the index bar in the semi-expanded state, the smartwatch detects a sliding operation (that is, an upward sliding operation) performed by the user in a direction of the tail end of the index bar towards the head end of the index bar, and switches the semi-expanded state of the index bar to the preset display state or the initial state. Alternatively, the smartwatch detects a sliding operation (that is, a downward sliding operation) performed by the user in a direction opposite the direction of the tail end of the index bar to the head end of the index bar, and switches the semi-expanded state of the index bar to the fully expanded state.

Likewise, in the foregoing example, a preset time period may be preconfigured for the smartwatch, and the smartwatch automatically switches from the semi-expanded state or the fully expanded state to the preset display state. In addition, in the foregoing example, in addition to detecting the operation performed by the user on the zoom control, zoom status switching of the index bar may also be implemented by detecting a sliding gesture operation performed by the user at the head end and tail ends of the index bar.

In some embodiments, contacts in multi-language are stored in the phone book of the smartwatch, and therefore, it may be impossible to search for all contacts by using one index rule. For example, if a contact with a Japanese name is stored in the phone book, the contact is not applicable to a manner of indexing by using an English letter, and an index rule applicable to Japanese needs to be preset in the smartwatch. In this case, a switching control is preset to implement switching of a multi-language index rule.

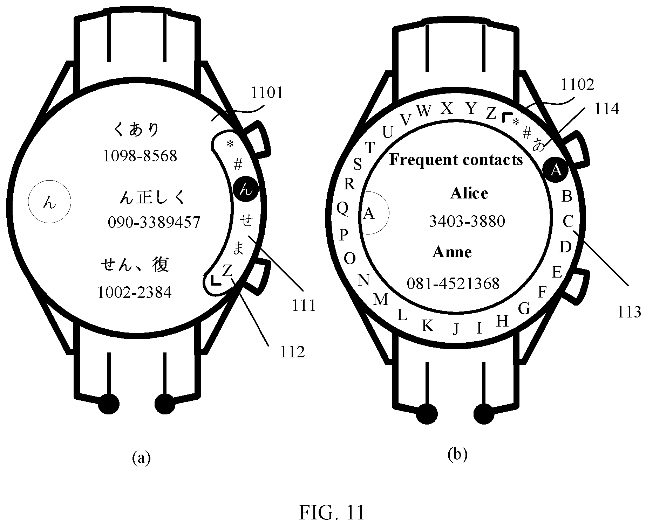

For example, an interface 1101 is shown in (a) in FIG. 11. It is assumed that a current phone book stores a contact that is applicable to two types of index rules: a Japanese index rule and an English index rule, and a preset local language in the smartwatch is Japanese, that is, a preset default language is Japanese. An index bar 111 displays an index identifier of the Japanese index rule, and displays a switching control for expanding the English index rule. For example, on the interface 1101, an English letter Z is displayed at the end of the index bar 111, to prompt the user to expand and display an index bar of the English index rule by using the English letter Z. After detecting an operation of tapping a switching control 112 (that is, the English letter Z) by the user, the smartwatch displays an interface 1102 shown in (b) in FIG. 11. On the interface 1102, an index bar 113 in a fully expanded state is displayed, and index identifiers (that is, English letters A to Z) of the English index rule are displayed in the index bar 113. In addition, a switching control 114 for returning the index bar for displaying the Japanese index rule is further displayed. On the interface 1102, after detecting an operation of tapping the switching control 114 by the user, the smartwatch displays the interface 1101, or displays the index bar that includes the Japanese index rule and that is in a fully expanded state.

In some embodiments, if the quantity of characters that need to be displayed in the index bar exceeds a preset quantity, some characters that exceed the preset quantity are hidden in the index bar, to avoid a problem that a display font is excessively small and a user operation is inconvenient because of an excessively large quantity of displayed characters. In addition, impact on a display effect is avoided. Based on this, a hidden control is preset in the index bar of the smartwatch, and a hidden character is displayed in the index bar by detecting an operation performed by the user on the hidden control. A character may be preset to represent the hidden control, for example, "*" and ".".

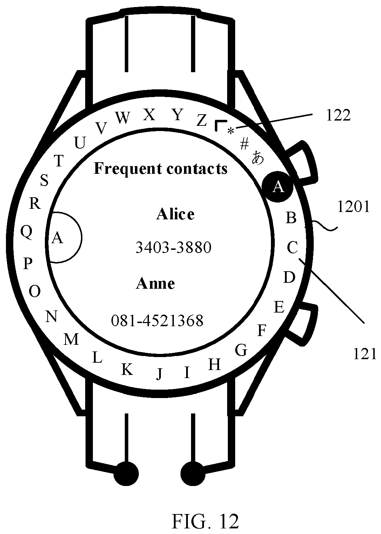

For example, on an interface 1201 shown in FIG. 12, a multi-language index rule is displayed in a current index bar 121, and it is assumed that a preset quantity is 30. In the current scenario, if a quantity of characters exceeds 30, some characters need to be hidden. After the smartwatch detects an operation of tapping a hidden control 122 by the user, index identifiers displayed in the index bar 121 automatically scroll, to display the hidden character.

In some embodiments, in a multi-language index bar, a quantity of displayed characters is also preset, to restrict a length of the index bar and a visual effect. For example, a minimum quantity of characters displayed in the index bar is 4. In addition, if the quantity of characters displayed in the index bar in a non-fully expanded state exceeds 7, a zoom control is set and is used to fold the index bar, to return to a preset display state.

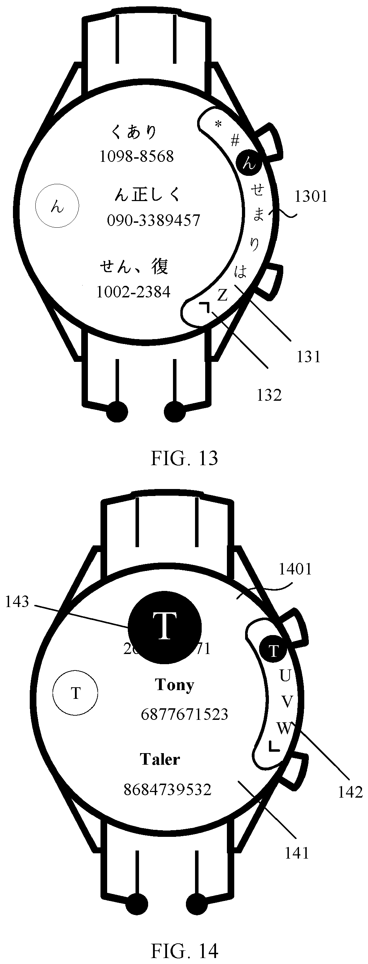

For example, on an interface 1301 shown in FIG. 13, if a quantity of characters displayed in a current index bar 131 exceeds the preset quantity, a zoom control 132 is displayed. After detecting an operation of tapping the zoom control 132 by the user, the smartwatch switches to display the preset display state. In addition, for an index bar zoom scenario of the multi-language index rule, reference may be made to the scenarios described in (a) to (d) in FIG. 9. Details are not described herein again.

In some embodiments, the smartwatch highlights, in a preset highlighting manner, an index identifier corresponding to currently displayed content. Highlighting of the index identifier by color and/or aperture has been described above. Another highlighting manner of a bubble manner is described herein.

For example, on an interface 1401 shown in FIG. 14, when content displayed in a display region 141 corresponds to a letter T in an index bar 142, a bubble 143 is displayed in the display region 141, and the letter T is displayed in the bubble 143. In addition, a display area of the letter T in the bubble 143 is greater than a display area of the letter T in the index bar 142, that is, the selected index identifier is displayed in the bubble after a font size of the index identifier is increased, to achieve the purpose of highlighting. The user can clearly identify content of the currently selected index identifier, to avoid a problem that the index identifier is unclear and then it is difficult for the user to perform identification because the display of the smartwatch has a relatively small area.

Further, on the interface 1201 shown in FIG. 12, after detecting that the operation of tapping the hidden control 122 by the user, the smartwatch may further display some hidden characters in the display region by using a bubble. Correspondingly, the smartwatch may further detect an operation of tapping a hidden character displayed in the bubble by the user, and switch to display corresponding display content and a corresponding index identifier. In this way, the hidden index identifier is highlighted by using the bubble, to facilitate selection by the user.

In some embodiments, after detecting an operation such as sliding or tapping performed by the user in the display region, the smartwatch no longer displays a bubble. That is, the bubble disappears in response to the operation of the user. Alternatively, a bubble display time period is preset. If the smartwatch does not detect an operation such as sliding or tapping within the preset bubble display time period, the bubble automatically disappears. For example, the preset bubble display time period is 3.5s. After the bubble is displayed for 3.5s and an operation of tapping the bubble is not detected, the bubble automatically disappears.

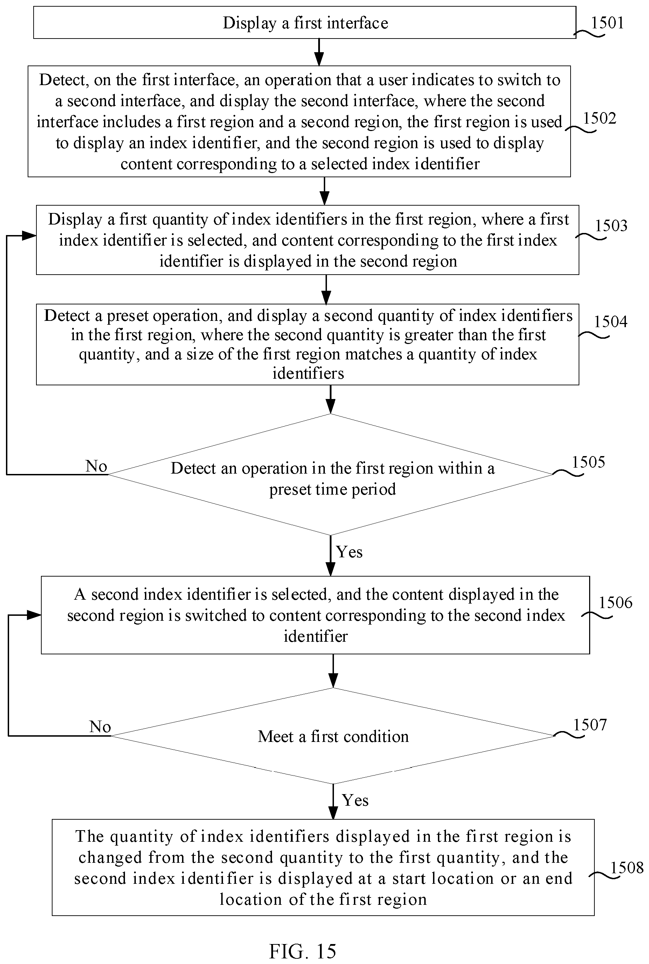

An embodiment of this application further provides an index display method, which may be applied to the scenarios shown in FIG. 3 to FIG. 14. FIG. 15 is a schematic flowchart of the index display method according to this embodiment of this application. The method includes at least displaying a second interface from step S1502 to S1508 and may include step S1501 to step S1508.

S1501: A wearable device displays a first interface.

The first interface is a main interface displayed by the wearable device, or an interface that is in a specific application and that does not need to be indexed.

S1502: The wearable device detects, on the first interface, an operation that a user indicates to switch to a second interface, and displays the second interface, where the second interface includes a first region and a second region, the first region is used to display an index identifier, and the second region is used to display content corresponding to a selected index identifier.

The second interface is an interface that needs to be indexed when relatively much display content is displayed, such as a phone book interface, a weather interface, and a clock interface. The first region is used to display an index bar, and the index bar includes an index identifier. The first region is located at an edge of the index interface and surrounds the second region.

S1503: The wearable device displays a first quantity of index identifiers in the first region, where a first index identifier is selected, and content corresponding to the first index identifier is displayed in the second region.

In some embodiments, the wearable device quickly locates corresponding display content by detecting an operation of tapping an index identifier by the user, and displays the corresponding display content in the second region, thereby improving indexing efficiency.

S1504: The wearable device detects a preset operation, and displays a second quantity of index identifiers in the first region, where the second quantity is greater than the first quantity, and a size of the first region matches a quantity of index identifiers.

The preset operation includes, for example, a sliding operation, an operation of tapping a zoom control, or another operation described above.

An expanded state of the index bar is be switched between a non-fully expanded state and a semi-fully expanded state or a fully expanded state. Alternatively, the expanded state of the index bar may be switched between an initial state, the semi-fully expanded state, and the fully expanded state. A quantity of index identifiers displayed in the index bar also changes as the expanded state changes.

For example, the first quantity is a quantity of index identifiers displayed in an index bar in the initial state. After detecting an operation of tapping the zoom identifier by the user, the wearable device switches the index bar to the fully expanded state, and displays the second quantity of index identifiers, that is, the second quantity is greater than the first quantity. In this way, when displaying the first quantity of index identifiers, the wearable device can provide a larger visible area, that is, a larger area of the second region, for the user. In addition, the wearable device may further switch from displaying an index bar of the first quantity index identifier to displaying an index bar of the second quantity index identifier, so that indexing efficiency is ensured while the visible area is considered.

S1505: Detect an operation in the first region within a preset time period. If yes, the wearable device performs step S1506. If no, the wearable device performs step S1503.

S1506: A second index identifier is selected, and the content displayed in the second region is switched to content corresponding to the second index identifier.

In some embodiments, if the wearable device does not detect a sliding or tapping operation in the first region within the preset time period, the wearable device automatically changes a quantity of index identifiers displayed in the first region from the second quantity to the first quantity. In this way, impact of a misoperation on the displayed content is avoided.

In some embodiments, if the wearable device detects a tapping operation in the first region within the preset time period, the wearable device displays, in the first region in a first preset manner, an index identifier selected by the tapping operation, and displays, in the second region content corresponding to the index identifier. Alternatively, if the wearable device detects a sliding operation in the first region within the preset time period, the wearable device displays, in the first region in the first preset manner, an index identifier corresponding to the sliding operation, and displays corresponding content in the second region through sliding. The first preset manner is used to highlight the selected index identifier, so that the user can quickly determine a location of the index identifier.

S1507: Meet a first condition. If yes, step S1508 is performed. If no, step S1506 is performed.

S1508: The quantity of index identifiers displayed in the first region is changed from the second quantity to the first quantity, and the second index identifier is displayed at a start location or an end location of the first region.

For example, the first condition includes: within the preset time period, detecting an operation of tapping a zoom control, or a sliding operation at the start location or the end location of the first region, or an operation in the second region, or no operation.

For example, if the wearable device does not detect, within the preset time period after switching the expanded state, an operation performed by the user on the index bar, the wearable device automatically switches back to a previous expanded state. For example, after switching the index bar from the initial state to the fully expanded state, if no operation performed by the user on the index bar is detected within the preset time period, the wearable device switches the index bar back to the initial state, to increase an area of the second region, that is, increase the visible area. In the current scenario, the quantity of the index bars automatically is changed from the second quantity to the first quantity, and in the index bars of the first quantity, an index identifier displayed at the start location is an index identifier corresponding to content displayed in the second region.

For another example, if the wearable device detects, within the preset time period after switching the expanded state, the operation of tapping the zoom control by the user, or the sliding operation at the start location or the end location of the first region, or the operation in the second region, in response to the operation of the user, the smartwatch may further switch the quantity of index identifiers displayed in the index bar from the second quantity to the first quantity, to increase the area of the second region. In addition, in the index bars of the first quantity, the index identifier displayed at the start location is the index identifier selected when the index bars of the second quantity are displayed.

For another example, if the wearable device detects an operation performed by the user on the index bar, the wearable device highlights a corresponding index identifier, and displays corresponding content in the second region. If an operation of tapping an index identifier in the index bar is detected, the index identifier is highlighted in the first region, and content corresponding to the index identifier is displayed in the second region. That is, if the first condition is not met currently, the wearable device performs step S1506 to detect the selected index identifier again, and display corresponding content in the second region.

In addition, the wearable device may further perform steps and functions performed by the smartwatch in the foregoing embodiment, to implement the index display method provided in the foregoing embodiment. Further, the index display method provided in this embodiment of this application may be further applied to another electronic device having a display function.

It may be understood that, to implement the foregoing functions, the wearable device includes corresponding hardware and/or software modules for performing the functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In embodiments, the wearable device may be divided into function modules based on the foregoing method examples. For example, each function module may be obtained through division based on each corresponding function, or two or more functions may be integrated into one processing module. The integrated module may be implemented in a form of hardware.

It should be noted that, in embodiments, division into the modules is an example, is merely logical function division, and may be other division during actual implementation.

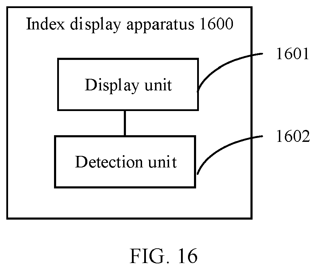

As shown in FIG. 16, an embodiment of this application discloses a schematic diagram of a structure of an index display apparatus. The index display apparatus 1600 may be configured to implement the steps and the functions that are performed by the smartwatch or the wearable device and that are recorded in the foregoing method embodiments. For example, the index display apparatus 1600 may specifically include a display unit 1601 and a detection unit 1602.

The display unit 1601 is configured to display an index interface.

In some embodiments, the index interface includes a first region and a second region, the first region is located at an edge of the index interface and surrounds the second region, a first quantity of index identifiers are displayed in the first region, a first index identifier in the first quantity of index identifiers is selected, and first content corresponding to the first index identifier is displayed in the second region.

The detection unit 1602 is configured to detect a first operation.

The display unit 1601 is further configured to: in response to the first operation, change a quantity of index identifiers displayed in the first region from the first quantity to a second quantity. The second quantity is greater than the first quantity, and a size of the first region matches the quantity of displayed index identifiers.

The detection unit 1602 is further configured to detect a second operation.

The display unit 1601 is further configured to: in response to the second operation, select a second index identifier in the second quantity of index identifiers displayed in the first region, and display second content corresponding to the second index identifier in the second region. The second index identifier is different from an index identifier displayed when the first quantity of index identifiers are displayed in the first region.

The display unit 1601 is further configured to: when a first condition is met, change the quantity of index identifiers displayed in the first region from the second quantity to the first quantity, and display the second index identifier in a first preset manner at a start location or an end location of the first region.

In a possible implementation, an outer edge shape of the first region matches an edge shape of the index interface.

In a possible implementation, an index rule corresponding to the index identifier includes a first index rule and a second index rule.

Optionally, the display unit 1601 is further configured to display, in the first region, an index identifier that complies with the first index rule and a first switching control.

The first switching control is used to switch to display an index identifier that complies with the second index rule.

The detection unit 1602 is further configured to detect an operation of tapping the first switching control.

The display unit 1601 is further configured to: in response to the operation of tapping the first switching control, display, in the first region, the index identifier that complies with the second index rule and a second switching control.

The second switching control is used to switch to display the index identifier that complies with the first index rule.

In a possible implementation, a maximum quantity of index identifiers displayed in the first region is less than or equal to a first threshold.

If a quantity of index identifiers that need to be displayed is greater than the first threshold, the display unit 1601 is further configured to: display a hidden control, and hide a third quantity of index identifiers. A quantity of index identifiers that need to be displayed after being hidden is less than or equal to the first threshold.

The detection unit 1602 is further configured to detect an operation of tapping the hidden control.

The display unit 1601 is further configured to: in response to the operation of tapping the hidden control, display the third quantity of hidden index identifiers in the first region.

In a possible implementation, the display unit 1601 is specifically configured to: when the first condition is met, display, at a first location on the index interface, the first region including the first quantity of index identifiers and including the second index identifier. The first location matches a location of the second index identifier in the first region including the second quantity of index identifiers. The first location is different from a second location at which the first region including the first quantity and including the first index identifier is displayed. The second location matches a location of the first index identifier in the first region including the second quantity of index identifiers.

Alternatively, when the first condition is met, the first region including the first quantity of index identifiers and including the second index identifier is displayed at a third location on the index interface. The third location is the same as a fourth location at which the first region including the first quantity and including the first index identifier is displayed.

In a possible implementation, the first operation is an operation of tapping a zoom control, or a sliding operation at the start location or the end location of the first region; and the second operation is a tapping operation or a sliding operation.

Optionally, the index display apparatus 1600 shown in FIG. 16 may further include a processing unit (not shown in FIG. 16). The processing unit may be implemented by a processor or a processor-related circuit component, and may be a processor or a processing module.

Optionally, the index display apparatus 1600 shown in FIG. 16 may further include a receiving unit (not shown in FIG. 16) and a sending unit (not shown in FIG. 16). The receiving unit is configured to support the index display apparatus 1600 in receiving data sent by another index display apparatus. The sending unit is configured to support the index display apparatus 1600 in sending data to another index display apparatus. The receiving unit and the sending unit may be collectively referred to as a transceiver unit, may be implemented by a transceiver or a transceiver-related circuit component, and may be a transceiver or a transceiver module.

Optionally, the index display apparatus 1600 shown in FIG. 16 may further include a storage unit (not shown in FIG. 16). The storage unit stores a program or instructions. When the processing unit executes the program or the instructions, the index display apparatus 1600 shown in FIG. 16 may execute the foregoing index display method.

For technical effects of the index display apparatus 1600 shown in FIG. 16, refer to the technical effects of the foregoing index display method. Details are not described herein again.

An embodiment of this application further provides a chip system, including a processor. The processor is coupled to a memory. The memory is configured to store a program or instructions. When the program or the instructions are executed by the processor, the chip system is enabled to implement the method according to any one of the foregoing method embodiments.

Optionally, there may be one or more processors in the chip system. The processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on a chip (system on a chip, SoC), a central processing unit (central processing unit, CPU), a network processor (network processor, NP), a digital signal processor (digital signal processor, DSP), a microcontroller unit (microcontroller unit, MCU), a programmable control device (programmable logic device, PLD), or another integrated chip.

It should be understood that the steps in the foregoing method embodiments may be completed by using a hardware integrated logic circuit or instructions in a form of software in the processor. The steps of the methods disclosed with reference to embodiments of this application may be directly performed by a hardware processor, or may be performed by a combination of hardware in the processor and a software module.

An embodiment of this application further provides a storage medium, configured to store instructions used by the foregoing wearable device.

An embodiment of this application further provides a computer-readable storage medium. The computer-readable storage medium stores computer instructions. When the computer instructions are run on a wearable device, the wearable device is enabled to perform the foregoing related method steps, to implement the index display method in the foregoing embodiments.

An embodiment of this application further provides a computer program product. When the computer program product runs on a computer, the computer is enabled to perform the foregoing related steps, to implement the index display method in the foregoing embodiments.

In addition, an embodiment of this application further provides an apparatus. The apparatus may be specifically a component or a module. The apparatus may include a processor and a memory that are connected to each other. The memory is configured to store computer-executable instructions. When the apparatus runs, the processor may execute the computer-executable instructions stored in the memory, the apparatus is enabled to perform the index display method in the foregoing method embodiments.

The wearable device, the computer-readable storage medium, the computer program product, or the chip provided in embodiments of this application is configured to perform the corresponding method provided above. Therefore, for beneficial effects that can be achieved by the wearable device, the computer-readable storage medium, the computer program product, or the chip, refer to the beneficial effects in the corresponding method provided above. Details are not described herein again.

The foregoing descriptions about implementations allow a person skilled in the art to understand that, for the purpose of convenient and brief description, division of the foregoing function modules is taken as an example for illustration. During actual application, the foregoing functions can be allocated to different modules and implemented based on a requirement, that is, an inner structure of an apparatus is divided into different function modules to implement all or some of the functions described above. For a detailed working process of the foregoing system, apparatus, and unit, refer to a corresponding process in the foregoing method embodiments. Details are not described herein again.

In the several embodiments provided in this application, it should be understood that the disclosed methods may be implemented in other manners. For example, the described terminal device embodiment is merely an example. For example, the module or unit division is merely logical function division, and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist independently physically, or two or more units may be integrated into one unit. The integrated unit may be implemented in a form of hardware, or may be implemented in a form of a software function unit.

When the integrated unit is implemented in the form of the software function unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) or a processor to perform all or some of the steps of the methods described in embodiments of this application. The foregoing storage medium includes any medium that can store program instructions, for example, a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An index display method, wherein the method comprises:
displaying (1502) an index interface, wherein the index interface comprises a first region and a second region, the first region is located at an edge of the index interface and surrounds the second region, a first quantity of index identifiers are displayed (1503) in the first region, a first index identifier in the first quantity of index identifiers is selected, and first content corresponding to the first index identifier is displayed in the second region, wherein the first quantity of index identifiers are displayed (1503) in an index bar in an initial non-fully expanded state;
in response to a first operation (1504), changing a quantity of index identifiers displayed in the first region from the first quantity to a second quantity and switching the index bar to a semi-fully expanded state or a fully expanded state, wherein the second quantity is greater than the first quantity, and a size of the first region matches the quantity of displayed index identifiers;
in response to a second operation (1505), selecting (1506) a second index identifier in the second quantity of index identifiers displayed in the first region, wherein second content corresponding to the second index identifier is displayed in the second region, and the second index identifier is different from an index identifier displayed when the first quantity of index identifiers are displayed in the first region; and
when a first condition is met (1507), changing (1508) the quantity of index identifiers displayed in the first region from the second quantity to the first quantity, switching the index bar to the initial non-fully expanded state, and displaying the second index identifier in a first preset manner in the index bar at a start location or an end location of the first region.

2. The method according to claim 1, wherein an outer edge shape of the first region matches an edge shape of the index interface.

3. The method according to claim 1 or 2, wherein an index rule corresponding to the index identifier comprises a first index rule and a second index rule, and the method further comprises:
displaying, in the first region, an index identifier that complies with the first index rule and a first switching control, wherein the first switching control is used to switch to display an index identifier that complies with the second index rule; and
in response to an operation of tapping the first switching control, displaying, in the first region, the index identifier that complies with the second index rule and a second switching control, wherein the second switching control is used to switch to display the index identifier that complies with the first index rule.

4. The method according to any one of claims 1 to 3, wherein a maximum quantity of index identifiers displayed in the first region is less than or equal to a first threshold, and the method further comprises:
if a quantity of index identifiers that need to be displayed is greater than the first threshold, displaying a hidden control, and hiding a third quantity of index identifiers, wherein a quantity of index identifiers that need to be displayed after being hidden is less than or equal to the first threshold; and
in response to an operation of tapping the hidden control, displaying the third quantity of hidden index identifiers in the first region.

5. The method according to any one of claims 1 to 4, wherein when the first condition is met, the changing the quantity of index identifiers displayed in the first region from the second quantity to the first quantity comprises:
when the first condition is met, displaying, at a first location on the index interface, the first region comprising the first quantity of index identifiers and comprising the second index identifier, wherein the first location matches a location of the second index identifier in the first region comprising the second quantity of index identifiers, the first location is different from a second location at which the first region comprising the first quantity and comprising the first index identifier is displayed, and the second location matches a location of the first index identifier in the first region comprising the second quantity of index identifiers; or
when the first condition is met, displaying, at a third location on the index interface, the first region comprising the first quantity of index identifiers and comprising the second index identifier, wherein the third location is the same as a fourth location at which the first region comprising the first quantity and comprising the first index identifier is displayed.

6. The method according to any one of claims 1 to 5, wherein the first operation is an operation of tapping a zoom control, or a sliding operation at the start location or the end location of the first region; and the second operation is a tapping operation or a sliding operation.

7. A device, comprising a processor (101), a memory (103), and a display (109), wherein the memory and the display are coupled to the processor, the memory is configured to store computer program code, the computer program code comprises computer instructions, and when the processor reads the computer instructions from the memory, the device is enabled to perform the following operations:
displaying (1502) an index interface, wherein the index interface comprises a first region and a second region, the first region is located at an edge of the display and surrounds the second region, a first quantity of index identifiers are displayed (1503) in the first region, a first index identifier in the first quantity of index identifiers is selected, and first content corresponding to the first index identifier is displayed in the second region, wherein the first quantity of index identifiers are displayed (1503) in an index bar in an initial non-fully expanded state;
in response to a first operation (1504), changing a quantity of index identifiers displayed in the first region from the first quantity to a second quantity and switching the index bar to a semi-fully expanded state or a fully expanded state, wherein the second quantity is greater than the first quantity, and a size of the first region matches the quantity of displayed index identifiers;
in response to a second operation (1505), selecting (1506) a second index identifier in the second quantity of index identifiers displayed in the first region, wherein second content corresponding to the second index identifier is displayed in the second region, and the second index identifier is different from an index identifier displayed when the first quantity of index identifiers are displayed in the first region; and
when a first condition is met (1507), changing (1508) the quantity of index identifiers displayed in the first region from the second quantity to the first quantity, switching the index bar to the initial non-fully expanded state, and displaying the second index identifier in the index bar in a first preset manner at a start location or an end location of the first region.

8. The device according to claim 7, wherein an outer edge shape of the first region matches an inner edge shape of the display.

9. The device according to claim 7 or 8, wherein an index rule corresponding to the index identifier comprises a first index rule and a second index rule; and when the processor reads the computer instructions from the memory, the device is further enabled to perform the following operations:
displaying, in the first region, an index identifier that complies with the first index rule and a first switching control, wherein the first switching control is used to switch to display an index identifier that complies with the second index rule; and
in response to an operation of tapping the first switching control, displaying, in the first region, the index identifier that complies with the second index rule and a second switching control, wherein the second switching control is used to switch to display the index identifier that complies with the first index rule.

10. The device according to any one of claims 7 to 9, wherein a maximum quantity of index identifiers displayed in the first region is less than or equal to a first threshold; and when the processor reads the computer instructions from the memory, the device is further enabled to perform the following operations:
if a quantity of index identifiers that need to be displayed is greater than the first threshold, displaying a hidden control, and hiding a third quantity of index identifiers, wherein a quantity of index identifiers that need to be displayed after being hidden is less than or equal to the first threshold; and
in response to an operation of tapping the hidden control, displaying the third quantity of hidden index identifiers in the first region.

11. The device according to any one of claims 7 to 10, wherein when the first condition is met, the changing the quantity of index identifiers displayed in the first region from the second quantity to the first quantity comprises:
when the first condition is met, displaying, at a first location on the index interface, the first region comprising the first quantity of index identifiers and comprising the second index identifier, wherein the first location matches a location of the second index identifier in the first region comprising the second quantity of index identifiers, the first location is different from a second location at which the first region comprising the first quantity and comprising the first index identifier is displayed, and the second location matches a location of the first index identifier in the first region comprising the second quantity of index identifiers; or
when the first condition is met, displaying, at a third location on the index interface, the first region comprising the first quantity of index identifiers and comprising the second index identifier, wherein the third location is the same as a fourth location at which the first region comprising the first quantity and comprising the first index identifier is displayed.

12. The device according to any one of claims 7 to 11, wherein the first operation is an operation of tapping a zoom control, or a sliding operation at the start location or the end location of the first region; and the second operation is a tapping operation or a sliding operation.

13. The device according to any one of claims 7 to 12, wherein the device is a wearable device.

14. A computer-readable storage medium, comprising a program or instructions, wherein when the program or the instructions are executed, the method according to any one of claims 1 to 6 is implemented.

15. A computer program product, wherein when the computer program product runs on a device, the device is enabled to perform the method according to any one of claims 1 to 6.

## Patentansprüche

1. Indexanzeigeverfahren, wobei das Verfahren Folgendes umfasst:
Anzeigen (1502) einer Indexschnittstelle, wobei die Indexschnittstelle einen ersten Bereich und einen zweiten Bereich umfasst, der erste Bereich sich an einem Rand der Indexschnittstelle befindet und den zweiten Bereich umgibt, eine erste Menge von Indexkennungen in dem ersten Bereich angezeigt wird (1503), eine erste Indexkennung in der ersten Menge von Indexkennungen ausgewählt wird, und ein erster Inhalt, der der ersten Indexkennung entspricht, in dem zweiten Bereich angezeigt wird, wobei die erste Menge von Indexkennungen in einem Indexbalken in einem anfänglichen nicht vollständig erweiterten Zustand angezeigt wird (1503);
als Reaktion auf eine erste Operation (1504), Ändern einer Anzahl von Indexkennungen, die in dem ersten Bereich angezeigt werden, von der ersten Menge zu einer zweiten Menge und Umschalten des Indexbalkens in einen halbvollständig erweiterten Zustand oder einen vollständig erweiterten Zustand, wobei die zweite Menge größer als die erste Menge ist und eine Größe des ersten Bereichs mit der Anzahl von angezeigten Indexkennungen übereinstimmt;
als Reaktion auf eine zweite Operation (1505), Auswählen (1506) einer zweiten Indexkennung in der zweiten Menge von Indexkennungen, die in dem ersten Bereich angezeigt werden, wobei ein zweiter Inhalt, der der zweiten Indexkennung entspricht, in dem zweiten Bereich angezeigt wird und die zweite Indexkennung sich von einer Indexkennung unterscheidet, die angezeigt wird, wenn die erste Menge von Indexkennungen in dem ersten Bereich angezeigt wird; und
wenn eine erste Bedingung erfüllt ist (1507), Ändern (1508) der Anzahl von Indexkennungen, die in dem ersten Bereich angezeigt werden, von der zweiten Menge zu der ersten Menge, Umschalten des Indexbalkens in den anfänglichen nicht vollständig erweiterten Zustand und Anzeigen der zweiten Indexkennung auf eine erste voreingestellte Weise in dem Indexbalken an einer Startposition oder einer Endposition des ersten Bereichs.

2. Verfahren nach Anspruch 1, wobei eine Außenrandform des ersten Bereichs mit einer Randform der Indexschnittstelle übereinstimmt.

3. Verfahren nach Anspruch 1 oder 2, wobei eine Indexregel, die der Indexkennung entspricht, eine erste Indexregel und eine zweite Indexregel umfasst und das Verfahren ferner Folgendes umfasst:
Anzeigen, in dem ersten Bereich, einer Indexkennung, die die erste Indexregel erfüllt, und einer ersten Schaltsteuerung, wobei die erste Schaltsteuerung verwendet wird, um umzuschalten, um eine Indexkennung anzuzeigen, die die zweite Indexregel erfüllt; und
als Reaktion auf eine Operation des Antippens der ersten Schaltsteuerung, Anzeigen, in dem ersten Bereich, der Indexkennung, die die zweite Indexregel erfüllt, und einer zweiten Schaltsteuerung, wobei die zweite Schaltsteuerung verwendet wird, um umzuschalten, um die Indexkennung anzuzeigen, die die erste Indexregel erfüllt.

4. Verfahren nach einem der Ansprüche 1 bis 3, wobei eine maximale Anzahl von Indexkennungen, die in dem ersten Bereich angezeigt werden, kleiner oder gleich einem ersten Schwellenwert ist, und das Verfahren ferner Folgendes umfasst:
falls eine Menge von Indexkennungen, die angezeigt werden müssen, größer als der erste Schwellenwert ist, Anzeigen einer verborgenen Steuerung und Ausblenden einer dritten Menge von Indexkennungen, wobei eine Menge von Indexkennungen, die angezeigt werden müssen, nachdem sie ausgeblendet wurden, kleiner als oder gleich dem ersten Schwellenwert ist; und
als Reaktion auf eine Operation des Antippens der verborgenen Steuerung, Anzeigen der dritten Menge von verborgenen Indexkennungen im ersten Bereich.

5. Verfahren nach einem der Ansprüche 1 bis 4, wobei, wenn die erste Bedingung erfüllt ist, das Ändern der Menge von Indexkennungen, die in dem ersten Bereich angezeigt werden, von der zweiten Menge zu der ersten Menge Folgendes umfasst:
wenn die erste Bedingung erfüllt ist, Anzeigen, an einem ersten Ort auf der Indexschnittstelle, des ersten Bereichs, der die erste Menge von Indexkennungen und die zweite Indexkennung umfasst, wobei der erste Ort mit einem Ort der zweiten Indexkennung in dem ersten Bereich, der die zweite Menge von Indexkennungen umfasst, übereinstimmt, wobei der erste Ort sich von einem zweiten Ort unterscheidet, an dem der erste Bereich, der die erste Menge umfasst und die erste Indexkennung umfasst, angezeigt wird, und der zweite Ort mit einem Ort der ersten Indexkennung in dem ersten Bereich übereinstimmt, der die zweite Menge von Indexkennungen umfasst; oder
wenn die erste Bedingung erfüllt ist, Anzeigen, an einem dritten Ort auf der Indexschnittstelle, des ersten Bereichs, der die erste Menge von Indexkennungen umfasst und die zweite Indexkennung umfasst, wobei der dritte Ort der gleiche ist wie ein vierter Ort, an dem der erste Bereich, der die erste Menge und die erste Indexkennung umfasst, angezeigt wird.

6. Verfahren nach einem der Ansprüche 1 bis 5, wobei die erste Operation eine Operation des Antippens einer Zoomsteuerung oder eine Gleitoperation an der Startposition oder der Endposition des ersten Bereichs ist; und die zweite Operation eine Antippoperation oder eine Gleitoperation ist.

7. Vorrichtung, umfassend einen Prozessor (101), einen Speicher (103) und eine Anzeige (109), wobei der Speicher und die Anzeige mit dem Prozessor gekoppelt sind, der Speicher zum Speichern von Computerprogrammcode konfiguriert ist, der Computerprogrammcode Computeranweisungen umfasst, und wenn der Prozessor die Computeranweisungen aus dem Speicher liest, die Vorrichtung zum Durchführen der folgenden Operationen in der Lage ist:
Anzeigen (1502) einer Indexschnittstelle, wobei die Indexschnittstelle einen ersten Bereich und einen zweiten Bereich umfasst, der erste Bereich sich an einem Rand der Anzeige befindet und den zweiten Bereich umgibt, eine erste Menge von Indexkennungen in dem ersten Bereich angezeigt wird (1503), eine erste Indexkennung in der ersten Menge von Indexkennungen ausgewählt wird, und ein erster Inhalt, der der ersten Indexkennung entspricht, in dem zweiten Bereich angezeigt wird, wobei die erste Menge von Indexkennungen in einem Indexbalken in einem anfänglichen nicht vollständig erweiterten Zustand angezeigt wird (1503);
als Reaktion auf eine erste Operation (1504), Ändern einer Anzahl von Indexkennungen, die in dem ersten Bereich angezeigt werden, von der ersten Menge zu einer zweiten Menge und Umschalten des Indexbalkens in einen halbvollständig erweiterten Zustand oder einen vollständig erweiterten Zustand, wobei die zweite Menge größer als die erste Menge ist und eine Größe des ersten Bereichs mit der Anzahl von angezeigten Indexkennungen übereinstimmt;
als Reaktion auf eine zweite Operation (1505), Auswählen (1506) einer zweiten Indexkennung in der zweiten Menge von Indexkennungen, die in dem ersten Bereich angezeigt werden, wobei ein zweiter Inhalt, der der zweiten Indexkennung entspricht, in dem zweiten Bereich angezeigt wird und die zweite Indexkennung sich von einer Indexkennung unterscheidet, die angezeigt wird, wenn die erste Menge von Indexkennungen in dem ersten Bereich angezeigt wird; und
wenn eine erste Bedingung erfüllt ist (1507), Ändern (1508) der Anzahl von Indexkennungen, die in dem ersten Bereich angezeigt werden, von der zweiten Menge zu der ersten Menge, Umschalten des Indexbalkens in den anfänglichen nicht vollständig erweiterten Zustand und Anzeigen der zweiten Indexkennung in dem Indexbalken auf eine erste voreingestellte Weise an einer Startposition oder einer Endposition des ersten Bereichs.

8. Vorrichtung nach Anspruch 7, wobei eine Außenrandform des ersten Bereichs mit einer Innenrandform der Anzeige übereinstimmt.

9. Vorrichtung nach Anspruch 7 oder 8, wobei eine Indexregel, die der Indexkennung entspricht, eine erste Indexregel und eine zweite Indexregel umfasst; und wenn der Prozessor die Computeranweisungen aus dem Speicher liest, die Vorrichtung ferner zum Durchführen der folgenden Operationen in der Lage ist:
Anzeigen, in dem ersten Bereich, einer Indexkennung, die die erste Indexregel erfüllt, und einer ersten Schaltsteuerung, wobei die erste Schaltsteuerung verwendet wird, um umzuschalten, um eine Indexkennung anzuzeigen, die die zweite Indexregel erfüllt; und
als Reaktion auf eine Operation des Antippens der ersten Schaltsteuerung, Anzeigen, in dem ersten Bereich, der Indexkennung, die die zweite Indexregel erfüllt, und einer zweiten Schaltsteuerung, wobei die zweite Schaltsteuerung verwendet wird, um umzuschalten, um die Indexkennung anzuzeigen, die die erste Indexregel erfüllt.

10. Vorrichtung nach einem der Ansprüche 7 bis 9, wobei eine maximale Anzahl von Indexkennungen, die in dem ersten Bereich angezeigt werden, kleiner oder gleich einem ersten Schwellenwert ist; und wenn der Prozessor die Computeranweisungen aus dem Speicher liest, die Vorrichtung ferner zum Durchführen der folgenden Operationen in der Lage ist:
falls eine Menge von Indexkennungen, die angezeigt werden müssen, größer als der erste Schwellenwert ist, Anzeigen einer verborgenen Steuerung und Ausblenden einer dritten Menge von Indexkennungen, wobei eine Menge von Indexkennungen, die angezeigt werden müssen, nachdem sie ausgeblendet wurden, kleiner als oder gleich dem ersten Schwellenwert ist; und
als Reaktion auf eine Operation des Antippens der verborgenen Steuerung, Anzeigen der dritten Menge von verborgenen Indexkennungen im ersten Bereich.

11. Vorrichtung nach einem der Ansprüche 7 bis 10, wobei, wenn die erste Bedingung erfüllt ist, das Ändern der Menge von Indexkennungen, die in dem ersten Bereich angezeigt werden, von der zweiten Menge zu der ersten Menge Folgendes umfasst:
wenn die erste Bedingung erfüllt ist, Anzeigen, an einem ersten Ort auf der Indexschnittstelle, des ersten Bereichs, der die erste Menge von Indexkennungen und die zweite Indexkennung umfasst, wobei der erste Ort mit einem Ort der zweiten Indexkennung in dem ersten Bereich, der die zweite Menge von Indexkennungen umfasst, übereinstimmt, wobei der erste Ort sich von einem zweiten Ort unterscheidet, an dem der erste Bereich, der die erste Menge umfasst und die erste Indexkennung umfasst, angezeigt wird, und der zweite Ort mit einem Ort der ersten Indexkennung in dem ersten Bereich übereinstimmt, der die zweite Menge von Indexkennungen umfasst; oder
wenn die erste Bedingung erfüllt ist, Anzeigen, an einem dritten Ort auf der Indexschnittstelle, des ersten Bereichs, der die erste Menge von Indexkennungen umfasst und die zweite Indexkennung umfasst, wobei der dritte Ort der gleiche ist wie ein vierter Ort, an dem der erste Bereich, der die erste Menge und die erste Indexkennung umfasst, angezeigt wird.

12. Vorrichtung nach einem der Ansprüche 7 bis 11, wobei die erste Operation eine Operation des Antippens einer Zoomsteuerung oder eine Gleitoperation an der Startposition oder der Endposition des ersten Bereichs ist; und die zweite Operation eine Antippoperation oder eine Gleitoperation ist.

13. Vorrichtung nach einem der Ansprüche 7 bis 12, wobei es sich bei der Vorrichtung um eine tragbare Vorrichtung handelt.

14. Computerlesbares Speichermedium, das ein Programm oder Anweisungen aufweist, wobei beim Ausführen des Programms oder der Anweisungen das Verfahren gemäß einem der Ansprüche 1 bis 6 implementiert wird.

15. Computerprogrammprodukt, wobei eine Vorrichtung, wenn das Computerprogrammprodukt auf der Vorrichtung ausgeführt wird, in die Lage versetzt wird, das Verfahren gemäß einem der Ansprüche 1 bis 6 durchzuführen.

## Revendications

1. Procédé d'affichage d'index, le procédé comprenant :
l'affichage (1502) d'une interface d'index, l'interface d'index comprenant une première région et une deuxième région, la première région étant située au niveau d'un bord de l'interface d'index et entourant la deuxième région, une première quantité d'identifiants d'index étant affichée (1503) dans la première région, un premier identifiant d'index dans la première quantité d'identifiants d'index étant sélectionné, et un premier contenu correspondant au premier identifiant d'index étant affiché dans la deuxième région, la première quantité d'identifiants d'index étant affichée (1503) dans une barre d'index dans un état non complètement étendu initial ;
en réponse à une première opération (1504), le changement d'une quantité d'identifiants d'index affichés dans la première région de la première quantité à une deuxième quantité et le passage de la barre d'index à un état semi-complètement étendu ou à un état complètement étendu, la deuxième quantité étant supérieure à la première quantité, et une taille de la première région correspondant à la quantité d'identifiants d'index affichés ;
en réponse à une deuxième opération (1505), la sélection (1506) d'un deuxième identifiant d'index dans la deuxième quantité d'identifiants d'index affichés dans la première région, un deuxième contenu correspondant au deuxième identifiant d'index étant affiché dans la deuxième région, et le deuxième identifiant d'index étant différent d'un identifiant d'index affiché lorsque la première quantité d'identifiants d'index est affichée dans la première région ; et
lorsqu'une première condition est remplie (1507), le changement (1508) de la quantité d'identifiants d'index affichés dans la première région de la deuxième quantité à la première quantité, le passage de la barre d'index à l'état non complètement étendu initial, et l'affichage du deuxième identifiant d'index d'une première manière prédéfinie dans la barre d'index à un emplacement de départ ou à un emplacement de fin de la première région.

2. Procédé selon la revendication 1, une forme de bord externe de la première région correspondant à une forme de bord de l'interface d'index.

3. Procédé selon la revendication 1 ou 2, une règle d'index correspondant à l'identifiant d'index comprenant une première règle d'index et une deuxième règle d'index, et le procédé comprenant en outre :
l'affichage, dans la première région, d'un identifiant d'index conforme à la première règle d'index et d'une première commande de commutation, la première commande de commutation étant utilisée pour passer en affichage un identifiant d'index conforme à la deuxième règle d'index ; et
en réponse à une opération de tapotement de la première commande de commutation, l'affichage, dans la première région, de l'identifiant d'index conforme à la deuxième règle d'index et d'une deuxième commande de commutation, la deuxième commande de commutation étant utilisée pour passer en affichage l'identifiant d'index conforme à la première règle d'index.

4. Procédé selon l'une quelconque des revendications 1 à 3, une quantité maximale d'identifiants d'index affichés dans la première région étant inférieure ou égale à un premier seuil, et le procédé comprenant en outre :
si une quantité d'identifiants d'index devant être affichés est supérieure au premier seuil, l'affichage d'une commande cachée, et le masquage d'une troisième quantité d'identifiants d'index, une quantité d'identifiants d'index devant être affichés après avoir été cachés étant inférieure ou égale au premier seuil ; et
en réponse à une opération de tapotement sur la commande cachée, l'affichage de la troisième quantité d'identifiants d'index cachés dans la première région.

5. Procédé selon l'une quelconque des revendications 1 à 4, lorsque la première condition est remplie, le changement de la quantité d'identifiants d'index affichés dans la première région de la deuxième quantité à la première quantité comprenant :
lorsque la première condition est remplie, l'affichage, à un premier emplacement sur l'interface d'index, de la première région comprenant la première quantité d'identifiants d'index et comprenant le deuxième identifiant d'index, le premier emplacement correspondant à un emplacement du deuxième identifiant d'index dans la première région comprenant la deuxième quantité d'identifiants d'index, le premier emplacement étant différent d'un deuxième emplacement auquel la première région comprenant la première quantité et comprenant le premier identifiant d'index est affichée, et le deuxième emplacement correspondant à un emplacement du premier identifiant d'index dans la première région comprenant la deuxième quantité d'identifiants d'index ; ou
lorsque la première condition est remplie, l'affichage, à un troisième emplacement sur l'interface d'index, de la première région comprenant la première quantité d'identifiants d'index et comprenant le deuxième identifiant d'index, le troisième emplacement étant le même qu'un quatrième emplacement auquel la première région comprenant la première quantité et comprenant le premier identifiant d'index est affichée.

6. Procédé selon l'une quelconque des revendications 1 à 5, la première opération étant une opération de tapotement d'une commande de zoom, ou une opération de glissement à l'emplacement de départ ou à l'emplacement de fin de la première région ; et la deuxième opération étant une opération de tapotement ou une opération de glissement.

7. Dispositif, comprenant un processeur (101), une mémoire (103) et un affichage (109), la mémoire et l'affichage étant couplés au processeur, la mémoire étant configurée pour stocker un code de programme informatique, le code de programme informatique comprenant des instructions informatiques, et lorsque le processeur lit les instructions informatiques depuis la mémoire, le dispositif étant autorisé à réaliser les opérations suivantes :
l'affichage (1502) d'une interface d'index, l'interface d'index comprenant une première région et une deuxième région, la première région étant située au niveau d'un bord de l'affichage et entourant la deuxième région, une première quantité d'identifiants d'index étant affichée (1503) dans la première région, un premier identifiant d'index dans la première quantité d'identifiants d'index étant sélectionné, et un premier contenu correspondant au premier identifiant d'index étant affiché dans la deuxième région, la première quantité d'identifiants d'index étant affichée (1503) dans une barre d'index dans un état non complètement étendu initial ;
en réponse à une première opération (1504), le changement d'une quantité d'identifiants d'index affichés dans la première région de la première quantité à une deuxième quantité et le passage de la barre d'index à un état semi-complètement étendu ou à un état complètement étendu, la deuxième quantité étant supérieure à la première quantité, et une taille de la première région correspondant à la quantité d'identifiants d'index affichés ;
en réponse à une deuxième opération (1505), la sélection (1506) d'un deuxième identifiant d'index dans la deuxième quantité d'identifiants d'index affichés dans la première région, un deuxième contenu correspondant au deuxième identifiant d'index étant affiché dans la deuxième région, et le deuxième identifiant d'index étant différent d'un identifiant d'index affiché lorsque la première quantité d'identifiants d'index est affichée dans la première région ; et
lorsqu'une première condition est remplie (1507), le changement (1508) de la quantité d'identifiants d'index affichés dans la première région de la deuxième quantité à la première quantité, le passage de la barre d'index à l'état non complètement étendu initial, et l'affichage du deuxième identifiant d'index dans la barre d'index d'une première manière prédéfinie à un emplacement de départ ou à un emplacement de fin de la première région.

8. Dispositif selon la revendication 7, une forme de bord externe de la première région correspondant à une forme de bord interne de l'affichage.

9. Dispositif selon la revendication 7 ou 8, une règle d'index correspondant à l'identifiant d'index comprenant une première règle d'index et une deuxième règle d'index ; et lorsque le processeur lit les instructions informatiques depuis la mémoire, le dispositif pouvant en outre exécuter les opérations suivantes :
l'affichage, dans la première région, d'un identifiant d'index conforme à la première règle d'index et d'une première commande de commutation, la première commande de commutation étant utilisée pour passer en affichage un identifiant d'index conforme à la deuxième règle d'index ; et
en réponse à une opération de tapotement de la première commande de commutation, l'affichage, dans la première région, de l'identifiant d'index conforme à la deuxième règle d'index et d'une deuxième commande de commutation, la deuxième commande de commutation étant utilisée pour passer en affichage l'identifiant d'index conforme à la première règle d'index.

10. Dispositif selon l'une quelconque des revendications 7 à 9, une quantité maximale d'identifiants d'index affichée dans la première région étant inférieure ou égale à un premier seuil ; et lorsque le processeur lit les instructions informatiques depuis la mémoire, le dispositif pouvant en outre effectuer les opérations suivantes :
si une quantité d'identifiants d'index devant être affichés est supérieure au premier seuil, l'affichage d'une commande cachée, et le masquage d'une troisième quantité d'identifiants d'index, une quantité d'identifiants d'index devant être affichés après avoir été cachés étant inférieure ou égale au premier seuil ; et
en réponse à une opération de tapotement sur la commande cachée, l'affichage de la troisième quantité d'identifiants d'index cachés dans la première région.

11. Dispositif selon l'une quelconque des revendications 7 à 10, lorsque la première condition est remplie, le changement de la quantité d'identifiants d'index affichés dans la première région de la deuxième quantité à la première quantité comprenant :
lorsque la première condition est remplie, l'affichage, à un premier emplacement sur l'interface d'index, de la première région comprenant la première quantité d'identifiants d'index et comprenant le deuxième identifiant d'index, le premier emplacement correspondant à un emplacement du deuxième identifiant d'index dans la première région comprenant la deuxième quantité d'identifiants d'index, le premier emplacement étant différent d'un deuxième emplacement auquel la première région comprenant la première quantité et comprenant le premier identifiant d'index est affichée, et le deuxième emplacement correspondant à un emplacement du premier identifiant d'index dans la première région comprenant la deuxième quantité d'identifiants d'index ; ou
lorsque la première condition est remplie, l'affichage, à un troisième emplacement sur l'interface d'index, de la première région comprenant la première quantité d'identifiants d'index et comprenant le deuxième identifiant d'index, le troisième emplacement étant le même qu'un quatrième emplacement auquel la première région comprenant la première quantité et comprenant le premier identifiant d'index est affichée.

12. Dispositif selon l'une quelconque des revendications 7 à 11, la première opération étant une opération de tapotement d'une commande de zoom, ou une opération de glissement à l'emplacement de départ ou à l'emplacement de fin de la première région ; et la deuxième opération étant une opération de tapotement ou une opération de glissement.

13. Dispositif selon l'une quelconque des revendications 7 à 12, le dispositif étant un dispositif pouvant être porté.

14. Support de stockage lisible par ordinateur, comprenant un programme ou des instructions, lorsque le programme ou les instructions sont exécutées, le procédé selon l'une quelconque des revendications 1 à 6 étant mis en œuvre.

15. Produit programme d'ordinateur, lorsque le produit programme d'ordinateur est exécuté sur un dispositif, le dispositif pouvant réaliser le procédé selon l'une quelconque des revendications 1 à 6.
